Europäisches Patentamt

European Patent Office

Office européen des brevets

(19)

(11) Publication number: **0 112 099**
**B1**

(12)

# EUROPEAN PATENT SPECIFICATION

(45) Date of publication of patent specification: **04.03.87**

(51) Int. Cl.⁴: **B 25 J 17/00**

(21) Application number: **83307336.4**

(22) Date of filing: **02.12.83**

(54) Robotic limb.

(30) Priority: **16.12.82 GB 8235877**

(43) Date of publication of application:
**27.06.84 Bulletin 84/26**

(45) Publication of the grant of the patent:
**04.03.87 Bulletin 87/10**

(84) Designated Contracting States:
**AT BE CH DE FR GB IT LI LU NL SE**

(56) References cited:
**EP-A-0 066 393**
**GB-A-1 502 972**
**US-A-4 224 501**

**PATENT ABSTRACTS OF JAPAN, unexamined
applications, M section, vol. 158, December 15,
1977 THE PATENT OFFICE JAPANESE
GOVERNMENT page 5833 M 77**

(73) Proprietor: **Cyber Robotics Limited
Tilling Drive Walton
Stone, Staffordshire ST15 OSA (GB)**

(72) Inventor: **Staples, Neil Raymond
28 Badcock Road
Haslingfield Cambridgeshire CB3 7LF (GB)**

(74) Representative: **Morton, Colin David et al
Keith W Nash & Co. Pearl Assurance House
90-92 Regent Street
Cambridge CB2 1DP (GB)**

Courier Press, Leamington Spa, England.

## Description

Field of Invention
This invention relates to robotic limbs.

Background to the Invention
The current market for robots is being satisfied by a considerable number of manufacturers offering a broad range of machines. The design of machines reflects the requirements of power, precision, speed and price in due measure. The machines have a number of features in common and carry out their chosen tasks well in welding, painting, picking, placing and other manipulative tasks. Many robotic arms operate in essence radially about a centre. They can cover various angles within their swept volume though they generally have less overall flexibility of movement than, say, a human arm. The natural market progression for robotics now appears to be in the field of carrying out swift dextrous movements of light loads with moderate accuracy and considerable variation of angular movement within the swept volume. The invention aims to provide a robotic limb for satisfying this need.

GB—A—1,502,972 discloses a manipulator comprising two spaced mounting plates interconnected by a link bar of fixed length and a pair of link bars adjustable in length, and control means for independently varying the length of the pair of link bars to cause controlled relative angular tilting of the mounting plates.

JP—A—52,103168 discloses a wrist joint mechanism for an industrial robot. The wrist joint mechanism comprises two spaced plates interconnected by four rods which are pivotally connected to one plate but which are slidably mounted in the other plate so that the spacing between the plates is variable.

EP—A—66,393 discloses a robot having three arms which at one end thereof are pivotally linked to a workhead plate (for example representing a welding device) and at the other end are longitudinally adjustable by the provision of an external thread on the arm meshing with an internal thread in a threaded gear. The gear is driven by a servo motor which may be programmed in accordance with the particular application in which the robot is employed.

None of the prior specifications enables a complete robot arm to be made up from a series of similar units, with each unit having associated drive motors for varying the effective length of certain link bars of the corresponding unit.

Summary of the Invention
According to the invention a robotic limb comprises a series of spaced mounting plates, adjacent mounting plates being interconnected by a corresponding group of link bars, each group of link bars including a link bar of fixed length and a pair of link bars adjustable in length, each group of link bars being associated with a corresponding pair of drive motors disposed between the corresponding pair of mounting plates, each pair of drive motors independently varying the respective lengths of the pair of link bars of the associated group to cause controlled relative angular tilting of adjacent mounting plates and resultant manoeuvring of the limb.

Preferably, one end of each link bar of fixed length is rigidly attached to the corresponding mounting plate, and the other end of each link bar of fixed length is attached to an adjacent mounting plate by a connection affording universal pivoting movement, like a ball and socket joint. Each end of each link bar of adjustable length may be connected to the corresponding mounting plates by universal or variable angle joints, so as to accommodate the relative tilting between adjacent mounting plates.

Each link bar of adjustable length may be made adjustable in length by any convenient means, such as a telescopic joint or expandable section, but a preferred arrangement is for each of these bars to be in two sections in threaded engagement, the drive motors then being operable to effect relative rotation between the two sections of each link bar to vary its effective length. The drive motors may be stepping motors or d.c. servo motors, and may be mounted on the mounting plates, on the fixed length bars or (less conveniently) on the variable length bars. The electric motors may drive the adjustable link bars by toothed belts and pulleys, chains and sprockets or other suitable alternatives.

By assembling a plurality of mounting plates and groups of link bars progressively along the length of the arm it is possible to provide a robotic limb which simulates quite closely the form and movement of a human arm and may be varied in size for particular circumstances. Also, the robotic limb may simulate the form and movement of a human leg, e.g. being used with another limb for perambulation.

The invention will now be described in greater detail and by way of example, with reference to the accompanying drawings, in which:—

Figure 1 is a perspective view showing two mounting plates and attendant group of three link bars forming part of a robotic arm according to the invention.

Figure 2 is a diagram showing in two dimensions possible movements of a robotic arm according to the invention, it being understood that the arm is capable of movement in three dimensions.

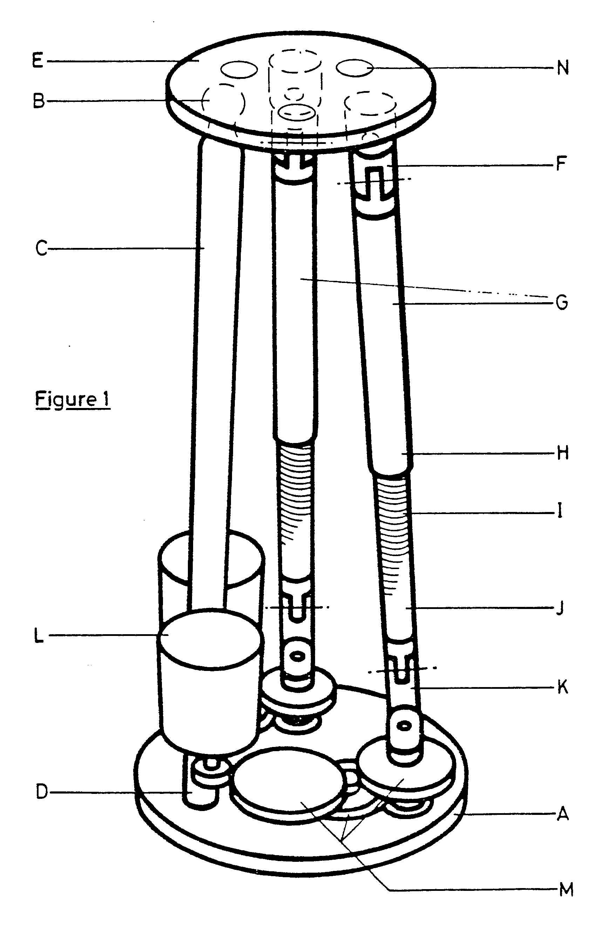

Detailed Description of the Drawings
Referring to Figure 1, a base mounting plate A has fixed to it a D one end of a link bar C of fixed length. At its other end, the link bar C is connected to a further mounting plate E by means of a ball and socket joint B affording universal swivelling of the link bar C with respect to the plate E. The plates A and E are also inter-connected by two variable length link bars G which are similar to each other and only one of which will be described.

A lower section J of the link bar G has an external thread at its upper end I, and at its lower end a two way universal joint K which is set in a bearing and is free to rotate. An upper section of the link bar G has at its lower end H a corresponding internal thread engaging with the external thread I. The upper end of the upper section of the bar G has a two way universal joint F which is secured to the upper mounting plate E such that the bar G may change angle but not rotate. The link bar C provides a convenient support for a drive motor L which provides power to the base of the link bar G by a gear reduction chain M. ·The gear reduction chain M may be replaced by a toothed belt and pulley drive, or a chain and sprocket drive. When the motor is driven the external thread I enters or retracts from the internal thread H, thereby altering the effective length of the bar G and causing the upper mounting plate E to change its position angularly with respect to the lower mounting plate A.

The drive motor L may be of the stepping variety and numerical control can be achieved by pulse counting. Alternatively, the motor L may be a d.c. servo motor with optical monitoring disc to record movement. Locations N indicate the lower mounting points of the next link group progressing along the arm which itself has a further mounting plate at the other end and so on.

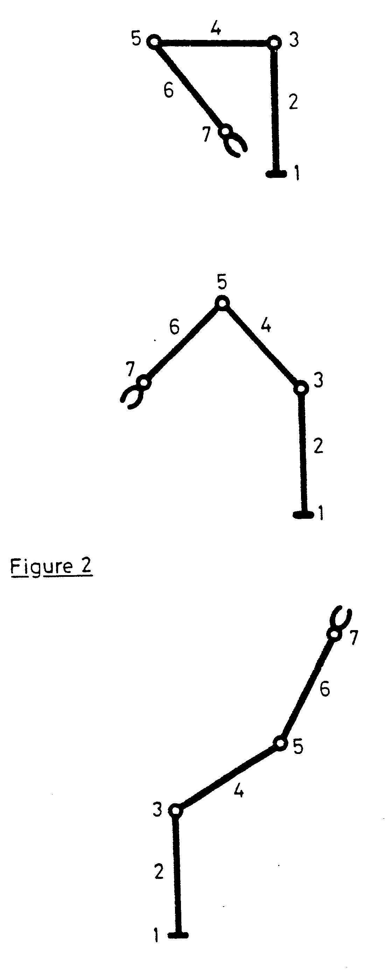

Figure 2 shows a diagram of a robotic arm in various positions. The complete arm may be made up from a series of units (like that of Figure 1) arranged in series, with duplicated mounting plates where the units adjoin, but it is more economical to have a single mounting plate between the link bar groups 2, 4, 6 etc. In any case, the link bars of fixed length in adjacent link bar groups may be in any chosen relative juxtaposition, i.e. aligned or angularly separated.

Mounting plates are indicated by the numbers 1, 3, 5 etc., and link bar groups 2, 4, 6 etc., with the whole arm terminated by a gripper or manipulator of any chosen form. The arm is capable of manoeuvring in three dimensions by controlled energisation of the motors.

Other means of producing the variable length link bars may be substituted for the type described, for example, a fluidic actuator plus position transducer would achieve the same result.

The whole arm assembly may be controlled from a manually operated control box in an instruction mode. The instructions derived manually may be recorded in a computer or other convenient store and when played back to the arm make it repeat the planned manoeuvre.

Alternatively, a "dead reckoning" computer control may be used subject to the provision of a suitable computer programme being established mathematically.

The described robotic arm is of considerable manoeuvrability and accuracy. Dependent on dimensions chosen and availability of power sources, it should have a similar performance to a human arm. The basic simplicity of the unit should enable it to be manufactured at a relatively low cost, allowing it to enter a new part of the market. The arm is thus under software control and does not need pick-offs or other detectors sensing the physical positions of the parts.

By so choosing the threadform lead angle, the resultant friction characteristic of the final drive element means that the unit can not be over driven in reverse by external loads. This makes it ideal for use with power tools, etc. as it can withstand their attendant torque reactions.

For applications where some chemical protection is required for the structural and drive components it would be possible to fit a compliant bellows over the whole assembly.

Instead of the ball and socket joint B, a universal joint like joint F may be used to connect the end of the bar C to the plate E.

**Claims**

1. A robotic limb comprising a series of spaced mounting plates, adjacent mounting plates being interconnected by a corresponding group of link bars each group of link bars including a link bar of fixed length and a pair of link bars adjustable in length, each group of link bars being associated with a corresponding pair of drive motors disposed between the corresponding pair of mounting plates, each pair of drive motors independently varying the respective lengths of the pair of link bars of the associated group to cause controlled relative angular tilting of adjacent mounting plates and resultant manoeuvring of the limb.

2. A robotic limb according to claim 1, wherein one end of each link bar of fixed length is rigidly attached to the corresponding mounting plate, and the other end of each link bar of fixed length is attached to an adjacent mounting plate by a connection affording universal pivoting movement.

3. A robotic limb according to claim 2, wherein the said connection affording universal pivoting movement is a ball and socket joint.

4. A robotic limb according to any of the preceding claims, wherein each end of each link bar of adjustable length is connected to the corresponding mounting plates by universal or variable angle joints, so as to accommodate the relative tilting between adjacent mounting plates.

5. A robotic limb according to any of the preceding claims, wherein each link bar adjustable in length is in two sections in threaded engagement, the corresponding drive motor then being operable to effect relative rotation between the two sections of each link bar to vary its effective length.

6. A robotic limb according to any of the preceding claims, consisting of similar units, each of which comprises two spaced mounting plates interconnected by a corresponding group of link bars, the mounting plates being duplicated where units adjoin.

7. A robotic limb according to any of the preceding claims, wherein the drive motors are electric motors, being stepping motors or d.c. servo motors and being mounted on the mounting plates.

8. A robotic limb according to claim 7, wherein the electric motors drive the link bars of adjustable length by means of toothed belts.

9. A robotic limb according to any of the preceding claims wherein the drive motors are governed by computer software.

**Revendications**

1. Elément de bras de robot comprenant une série de plaques espacées de montage, les plaques adjacentes de montage étant raccordées par un groupe correspondant de bielles, chaque groupe de bielles comprenant une bielle de longueur fixe et deux bielles de longueur réglable, chaque groupe de bielles étant associé à une paire correspondante de moteurs placés entre la paire correspondante de plaques de montage, chaque paire de moteurs faisant varier indépendamment la longueur respective des bielles de la paire du groupe associé et provoque un basculement angulaire relatif réglé des plaques adjacentes de montage et une manoeuvre résultante de l'élément de bras.

2. Elément de bras selon la revendication 1, dans lequel une première extrémité de chaque bielle de longueur fixe est fixée rigidement à la plaque correspondante de montage, et l'autre extrémité de chaque bielle de longueur fixe est fixée à une plaque adjacente de montage par un raccord permettant un pivotement universel.

3. Elément de bras de robot selon la revendication 2, dans lequel la connexion permettant un pivotement universel est un joint à rotule.

4. Elément de bras de robot selon l'une quelconque des revendications précédentes, dans lequel chaque extrémité de chaque bielle de longueur réglable est raccordée aux plaques correspondantes de montage par des joints universels ou d'angle variable de manière que le pivotement relatif des plaques adjacentes de montage soit possible.

5. Elément de bras de robot selon l'une quelconque des revendications précédentes, dans lequel chaque bielle de longueur réglable est formée en deux tronçons coopérant par vissage, le moteur correspondant étant destiné alors à assurer une rotation relative des deux tronçons de chaque bielle afin que sa longueur efficace varie.

6. Elément de bras de robot selon l'une quelconque des revendications précédentes, constitué d'éléments semblables comprenant chacun deux plaques distantes de montage raccordées par un groupe correspondant de bielles, les plaques de montage étant partagées lorsque des éléments sont adjacents.

7. Elément de bras de robot selon l'une quelconque des revendications précédentes, dans lequel les moteurs sont des moteurs électriques, sous forme de moteurs pas à pas ou de servomoteurs à courant continu, et sont montés sur les plaques de montage.

8. Elément de bras de robot selon la revendication 7, dans lequel les moteurs entraînent les bielles de longueur réglable par l'intermédiaire de courroies crantées.

9. Elément de bras de robot selon l'une quelconque des revendications précédentes, dans lequel les moteurs sont contrôlés par un logiciel d'ordinateur.

**Patentansprüche**

1. Ein Roboterglied aus einer Serie von auseinanderliegenden Montageplatten, wobei benachbarte Montageplatten durch eine entsprechende Gruppe aus Gelenkstangen miteinander verbunden sind, jede Gruppe von Gelenkstangen eine Gelenkstange mit fester Länge und zwei Gelenkstangen mit einstellbarer Länge enthält, jede Gruppe von Gelenkstangen mit einem zwischen dem entsprechenden Paar von Montageplatten angeordneten Paar von Antriebsmotoren zusammenwirkt, und jedes Paar von Antriebsmotoren die betreffenden Längen der beiden Gelenkstangen der zugehörigen Gruppe unabhängig verändert, um ein gesteuertes relatives winkelmäßiges Kippen der benachbarten Montageplatten und ein sich daraus ergebendes Manövrieren des Gliedes zu bewirken.

2. Ein Roboterglied gemäß Anspruch 1, wobei ein Ende jeder Gelenkstange mit fester Länge an der entsprechenden Montageplatte starr befestigt und das andere Ende jeder Gelenkstange mit fester Länge über eine Verbindung, die eine universelle Schwenkbewegung zuläßt, an einer benachbarten Montageplatte befestigt ist.

3. Ein Roboterglied gemäß Anspruch 2, wobei die Verbindung, die die universelle Schwenkbewegung zuläßt, ein Universalgelenk ist.

4. Ein Roboterglied gemäß irgendeinem der vorhergehenden Ansprüche, wobei jedes Ende jeder Gelenkstange mit einstellbarer Länge über Universalgelenke oder Gelenke mit veränderbaren Winkeln mit den entsprechenden Montageplatten verbunden ist, um damit das relative Kippen zwischen benachbarten Montageplatten aufzufangen.

5. Ein Roboterglied gemäß irgendeinem der vorhergehenden Ansprüche, wobei jede Gelenkstange mit einstellbarer Länge aus zwei miteinander verschraubten Abschnitten besteht, wobei der entsprechende Antriebsmotor dann eine Relativdrehung zwischen den beiden Abschnitten jeder Gelenkstange zum Verändern von deren wirksamer Länge bewirkt.

6. Ein Roboterglied gemäß irgendeinem der vorhergehenden Ansprüche, bestehend aus ähnlichen Einheiten, von denen jede aus zwei auseinanderliegenden Montageplatten besteht, die über eine entsprechende Gruppe von Gelenkstangen mitenander verbunden sind, wobei die

7

0 112 099

8

Montageplatten dort, wo Einheiten aneinanderstoßen, dupliziert sind.

7. Ein Roboterglied gemäß irgendeinem der vorhergehenden Ansprüche, wobei die Antriebsmotoren elektrische Motore, Schrittmotore oder Gleichspannungs-Servomotore sind und auf den Montageplatten befestigt sind.

8. Ein Roboterglied gemäß Anspruch 7, wobei die Elektromotore die Gelenkstangen mit einstellbarer Länge über Zahnriemen antreiben.

9. Ein Roboterglied gemäß irgendeinem der vorhergehenden Ansprüche, wobei die Antriebsmotore durch Computer-Programme gesteuert werden.

Figure 1

Figure 2